# EUROPEAN PATENT SPECIFICATION

(11) **EP 2 508 415 B1**
(45) Date of publication and mention of the grant of the patent: **24.07.2013**
(21) Application number: 12163258.2
(22) Date of filing: 05.04.2012
(51) Int. Cl.: B62J 17/02, B62J 17/06

(54) **Motorcycle**
Motorrad
Motocyclette

(30) Priority: 07.04.2011 JP 2011085192
(43) Date of publication of application: 10.10.2012
(73) Proprietor: Yamaha Hatsudoki Kabushiki Kaisha, Iwata-shi, Shizuoka 438-8501 (JP)
(72) Inventor: Endo, Masato, Iwata-shi, Shizuoka 438-8501 (JP)
(74) Representative: Grünecker, Kinkeldey, Stockmair & Schwanhäusser

(56) References cited:
- JP-A- 2009 161 027
- JP-U- 57 053 988
- US-A1- 2008 202 835
- US-A1- 2009 008 180

## Description

### BACKGROUND OF THE INVENTION

### 1. Field of the Invention

The present invention relates to the structure of side cover parts of a motorcycle. A motorcycle according to the preamble of claim 1 is known from US 2008/202835 A1.

### 2. Description of the Related Art

In a motorcycle disclosed in JP 2008-162518 A, an engine is arranged below a main frame which extends from a head pipe obliquely in the rearward and downward direction, and the engine is suspended from the main frame. Components such as a fuel tank are not arranged above the main frame thus defining a space above the main frame. That is, in a side view of the vehicle, a part between the head pipe and a seat is largely indented. This type of motorcycle is conventionally referred to as an underbone type motorcycle.

A vehicle body cover of the motorcycle disclosed in JP 2008-162518 A has plate-like side cover parts which cover sides of a cylinder and a cylinder head of the engine. The side cover part has a lower portion which is positioned forward from a footrest, and the lower portion is positioned forward from leg of a rider when the rider places his feet on the footrest. The side cover part is arranged obliquely with respect to the fore and rear direction (vehicle advancing direction) such that a rear edge thereof is positioned further outwardly in the vehicle widthwise direction than a front edge thereof. Due to such arrangement of the side cover parts, it is possible to prevent an air flow, mud on a road or the Like from directly hitting on the legs of the rider.

### SUMMARY OF THE INVENTION

When rain falls and thus water or mud adheres on an outer surface of the side cover part, water or mud may receive an air flow generated during traveling to be flown rearward and may be splashed to legs of a rider.

During the traveling of a vehicle, a negative pressure is generated on a rear side of the side cover part, that is, around legs of a rider. Accordingly, water or mud on the outer surface of the side cover part is splashed toward the center in the vehicle widthwise direction from the rear edge of the side cover part due to the negative pressure. Accordingly, the mere expansion of the side cover parts toward the outside in the vehicle widthwise direction hardly reduces water or mud splashed to the legs of the rider.

It is an object of the present invention to reduce water or mud splashed to legs of a rider in a motorcycle

According to one aspect of the present invention, there is provided a motorcycle according to claim 1. Such a motorcycle includes, inter alia, **an engine, a vehicle body frame,**
a seat, a footrest and a side cover part. The engine includes a crankcase on a rear portion thereof and a cylinder part on a front portion whereof. The vehicle body frame includes a main frame part **extending obliquely in a rearward and downward direction from**
a head pipe which supports a steering shaft. A space is formed above the main frame part. The seat is arranged behind the space. The footrest is arranged in a lateral direction from the crankcase.

**The side cover part covers one lateral side of a right side and a left side of the vehicle body frame. The side cover part includes an outer** cover part and an inner cover part. A lower portion of the outer cover part is positioned forward from the footrest and on one lateral side of the front portion of the engine. The outer cover part extends upwardly from the lower portion thereof, and covers the **lateral side of the vehicle body frame. The inner cover part covers the lateral side of the vehicle body frame, and is arranged inwardly from the outer** cover part in the vehicle widthwise direction. The inner cover part includes a front edge which is positioned further forward than a front edge of the outer cover part and a rear edge which is positioned inwardly in the vehicle widthwise direction away from the outer cover part. The outer cover part and the inner cover part are arranged obliquely with respect to the fore and rear direction such that air flow hits on outer surfaces of the outer cover part and the inner cover part during traveling of a vehicle.

**The rear edge of the inner cover part is positioned further rearward than the front edge of the outer cover part. The outer cover part and the inner cover part extend from a position equal to or a lower position than the footrest to a position higher than that of an uppermost portion of a front wheel.**

According to the present invention, water or mud on an outer surface of the inner cover part does not reach an outer surface of the outer cover part although water or mud flows rearward by receiving an air flow generated during traveling. Accordingly, it is possible to reduce water or mud splashed toward legs of a rider from the rear edge of the side cover part.

In the present invention, the outer cover part and the inner cover part may be formed as an integral member or may be formed separately. Each of the outer cover part and the inner cover part may be constituted by combining a plurality of members. An opening may be formed between the rear edge of the inner cover part and the outer cover part or a wall may be provided between the rear edge of the inner cover part and the outer cover part. When the wall is formed between two cover parts, the wall may be integrally formed with the inner cover part or the wall may be integrally formed with the outer cover part. Further, the wall may be formed separately from the outer cover part and the inner cover part.

### BRIEF DESCRIPTION OF THE DRAWINGS

Fig. 1 is a side view of a motorcycle according to an embodiment of the present invention;
Fig. 2 is a side view of a front part of the motorcycle;
Fig. 3 is a perspective view of the front part of the motorcycle;
Fig. 4 is a front view of the motorcycle;
Fig. 5 is a front view of a front cover part and side cover parts which the motorcycle includes;
Fig. 6 is a front view of an inner cover part and an outer cover part which constitute the side cover part in a state where the inner cover part and the outer cover part are separated from each other;
Fig. 7 is a cross-sectional view taken along a line VII-VII in Fig. 2;
Fig. 8 is a perspective view of the inner cover part; and
Fig. 9A to Fig. 9C are views for explaining advantageous effects which the structure of the motorcycle according to the present invention possesses, wherein Fig. 9A is a view schematically showing the structure of a conventional side cover part, Fig. 9B is a view schematically showing a side cover part where a width of the conventional side cover part is increased, and Fig. 9C is a view schematically showing the structure of a side cover part of the motorcycle according to the present invention.

### DESCRIPTION OF THE PREFERRED EMBODIMENT

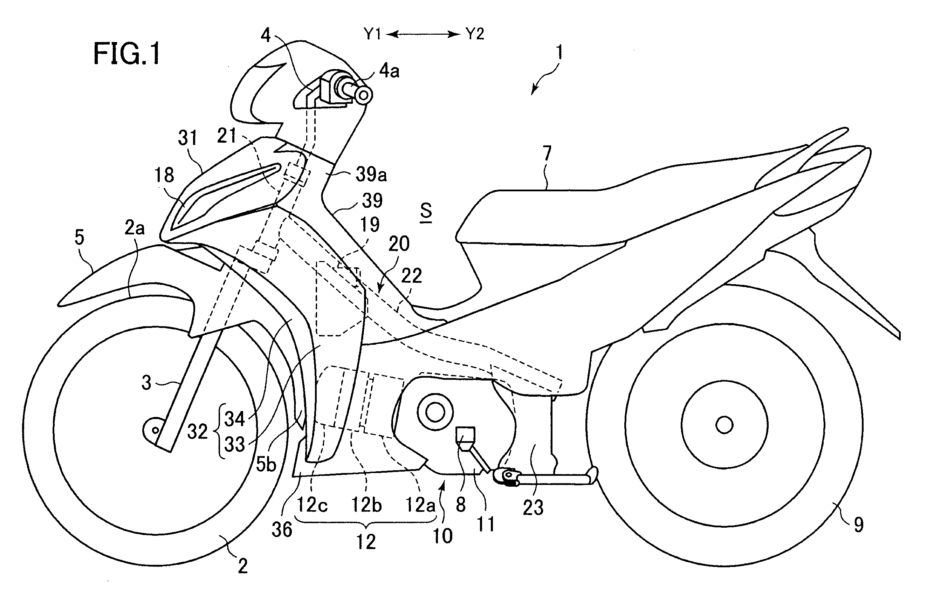

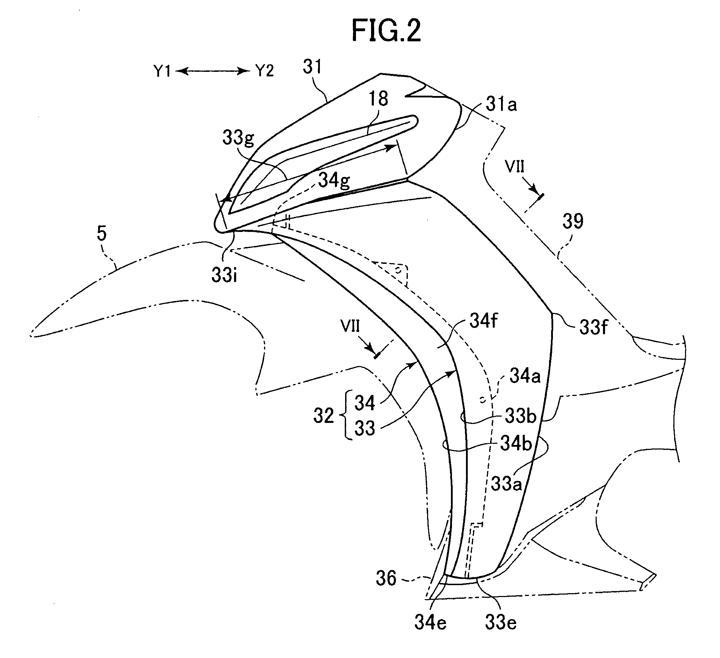

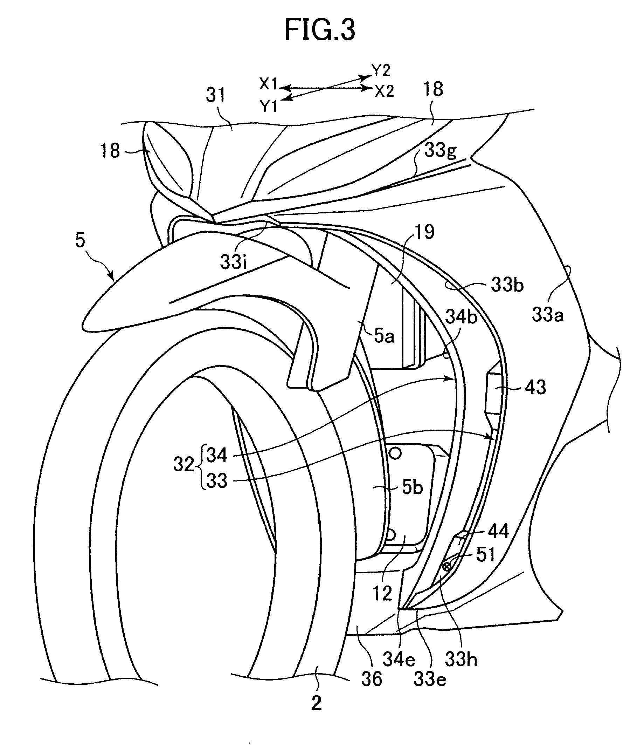

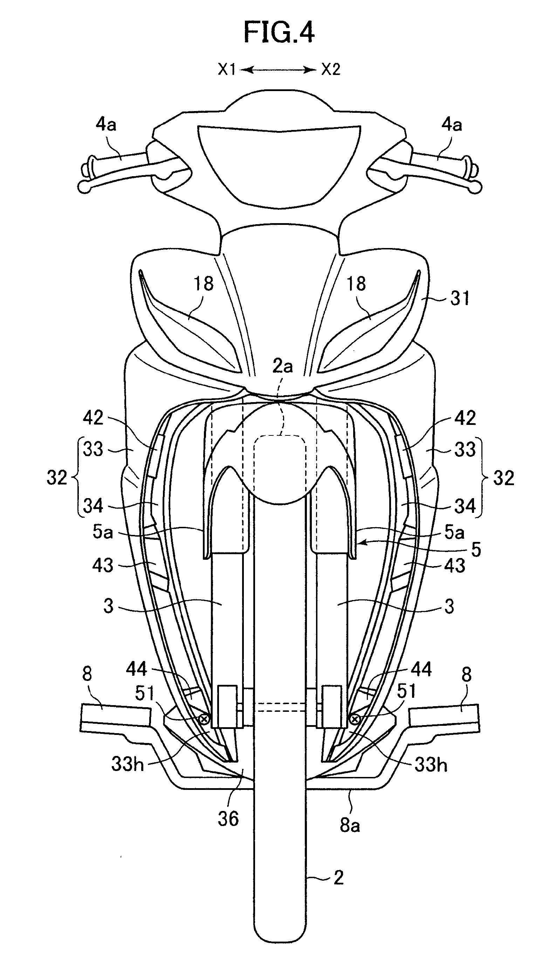

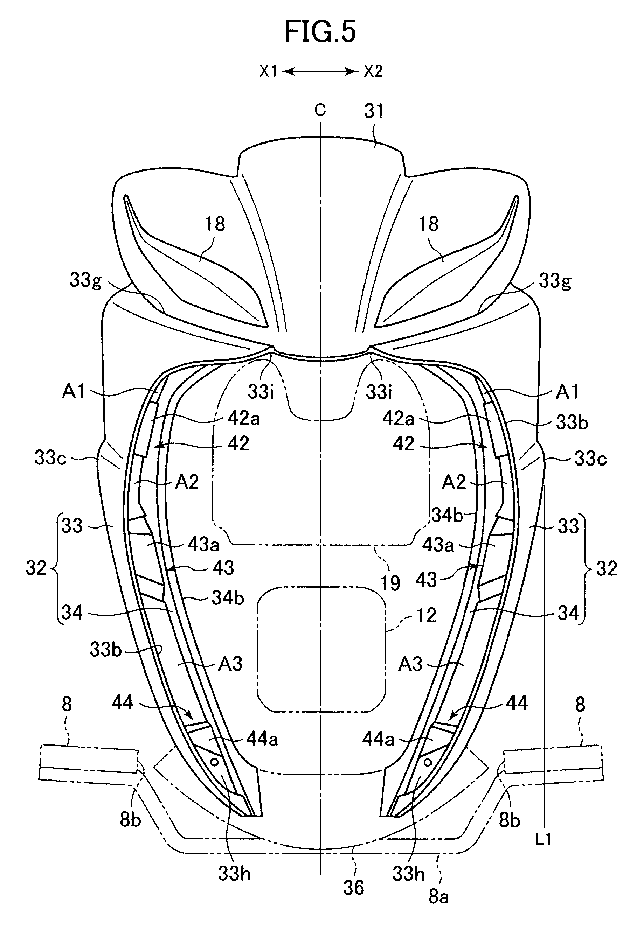

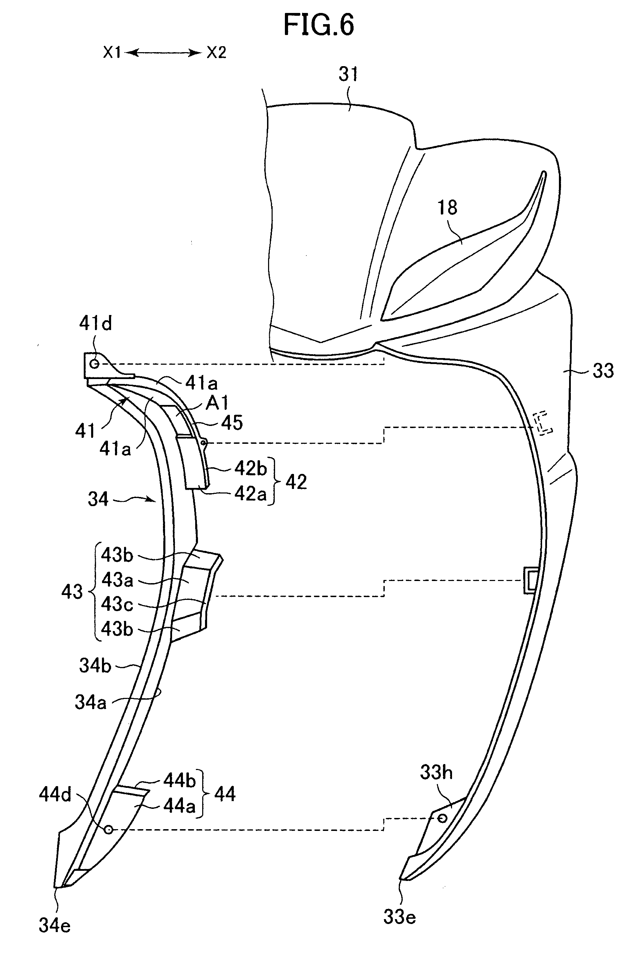

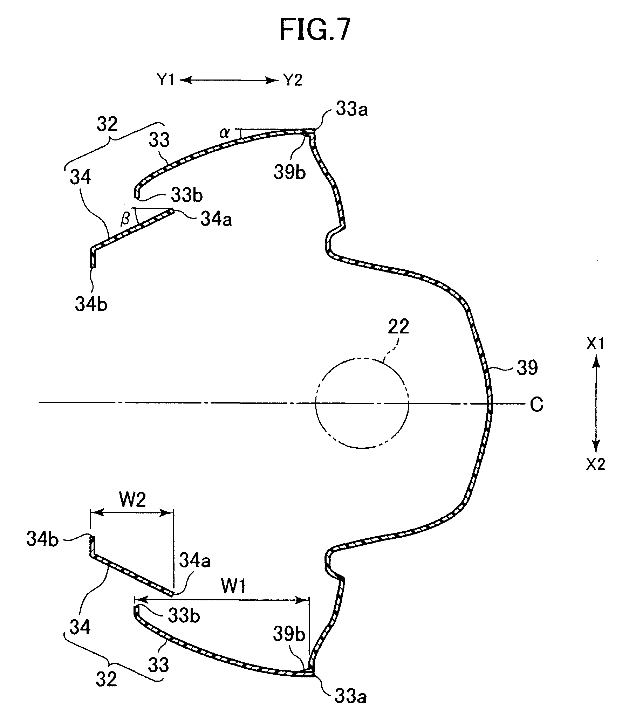

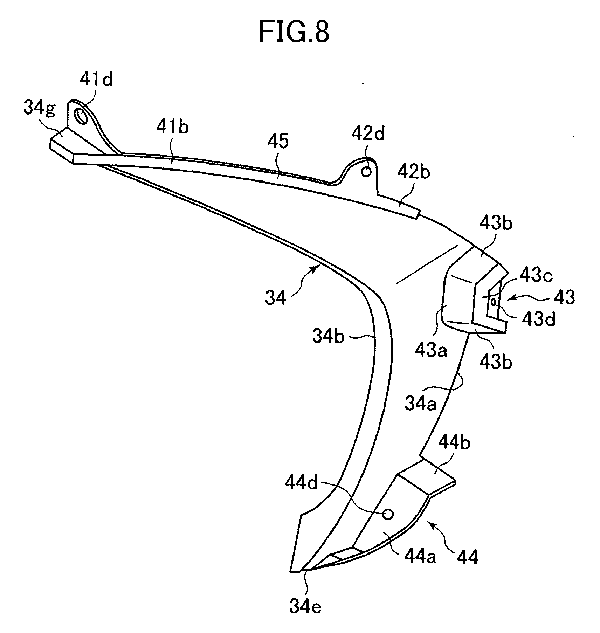

Hereinafter, an embodiment of the present invention will be explained in conjunction with drawings. Fig. 1 is a side view of a motorcycle 1 according to an embodiment of the present invention. Fig. 2 is a side view of a front part of the motorcycle 1. Fig. 3 is a perspective view of the front part of the motorcycle 1. Fig. 4 is a front view of the motorcycle 1. Fig. 5 is a front view of a front cover part 31 and side cover parts 32 which the motorcycle 1 includes. Fig. 6 is a front view showing a state of an inner cover part 34 and an outer cover part 33 which constitute the side cover part 32 where the inner cover part 34 and the outer cover part 33 are separated from each other in the lateral direction. Fig. 7 is a cross-sectional view taken along a line VII-VII in Fig. 2. Fig. 8 is a perspective view of the inner cover part 34. In the explanation made hereinafter, Y1 indicates a forward direction of the vehicle or a vehicle advancing direction, and X1-X2 indicates the vehicle widthwise direction (the lateral direction).

As shown in Fig. 1, a front wheel 2 of the motorcycle 1 is supported on lower ends of front suspensions 3. Upper portions of the front suspensions 3 are connected through a bracket to a steering shaft (not shown in the drawing) supported in a head pipe 21. An upper portion of the steering shaft is connected to a steering 4 through a bracket. The steering 4, the front suspensions 3 and the front wheel 2 can turn in the lateral direction about the steering shaft. A grip 4a is mounted on left and right portions of the steering 4 respectively.

A front fender 5 which covers the front wheel 2 is arranged above the front wheel 2. The front fender 5 has an approximately arcuate shape, and an axle of the front wheel 2 defines the center of the arcuate shape. Rear part 5b of the front fender 5 is positioned behind the front wheel 2, and extends obliquely in the rearward and downward direction. As described later, as viewed in a side view of a vehicle body, the rear part 5b of the front fender 5 overlaps the inner cover part 34 which constitutes the side cover part 32. As shown in Fig. 3, left and right side surfaces of the front fender 5 has an outermost portion 5a which bulges outwardly in the vehicle widthwise direction. The outermost portion 5a is located at an outermost position of the front fender 5. The front suspensions 3 are arranged inside the outermost parts 5a (see Fig. 4).

As shown in Fig. 1, an engine 10 of the motorcycle 1 includes a crankcase 11 on a rear portion thereof. The engine 10 also includes, on a front portion thereof, a cylinder part 12a inside which a cylinder is formed, a cylinder head 12b which is mounted on a front side of the cylinder part 12a, and a head cover 12c which is mounted on a front side of the cylinder head 12b. The head cover 12c and the cylinder head 12b may be formed as an integral member. Alternatively, the head cover 12c and the cylinder head 12b may be formed as separate members and may be fixed to each other by fastening members such as bolts. Here, the cylinder part 12a, the cylinder head 12b and the head cover 12c constitute an engine front part 12 as a whole. The engine front part 12 is positioned in front of the crankcase 11 which forms a rear portion of the engine 11. The engine front part 12 is slightly inclined toward an upper side and then arranged obliquely. A rear wheel 9 is arranged behind the engine 10. A torque of the engine 10 is transmitted to the rear wheel 9 through transmission members (not shown in the drawing) such as a chain, a shaft and a belt. In this embodiment, the engine front part 12 corresponds to a front portion of the engine defined in claims.

As shown in Fig. 1 and Fig. 3, an air cleaner 19 is arranged above the engine front part 12. Air sucked by the air cleaner 19 is fed to the engine front part 12 through an intake pipe (not shown in the drawing).

As shown in Fig. 1, the motorcycle 1 includes a vehicle body frame 20. The head pipe 21 which supports the steering shaft is arranged on a foremost portion of the vehicle body frame 20. The vehicle body frame 20 also includes a main frame part 22 which extends obliquely in the rearward and downward direction from the head pipe 21. The main frame part 22 extends toward the crankcase 11. The crankcase 11 is positioned below a rear portion of the main frame part 22, and is fixed to the main frame part 22. The vehicle body frame 20 includes rear frame parts 23 which extend downwardly from a rear end of the main frame part 22 and is positioned behind the crankcase 11. The crankcase 11 is fixed to the rear frame part 23.

The motorcycle 1 is a vehicle which is called as an underbone type. In this type of motorcycle, as exemplified in this embodiment, a device such as a fuel tank is not arranged between the head pipe 21 and a seat 7, and thus a space S is formed above the main frame part 22. The seat 7 is arranged behind the space S.

Footrests 8 to have a rider' feet placed thereon are arranged from the crankcase 11 in the lateral direction, that is, arranged on a right side and a left side of the crankcase 11 (see Fig. 4). A stay 8a extends between the right footrest 8 and the left footrest 8. The stay 8a is fixed to the crankcase 11 or the rear frame part 23.

As shown in Fig. 1, a vehicle body cover of the motorcycle 1 includes the front cover part 31, the left and right side cover parts 32, a lower cover part 36 and a back cover part 39.

The front cover part 31 is arranged in front of the head pipe 21 thus covering a front side of the head pipe 21 (see Fig. 1), The front cover part 31 has a left and right symmetrical form with respect to a vertical line which passes the center C in the vehicle widthwise direction (see Fig. 5). The front cover part 31 includes a turn signal (direction indicator) 18 on a right part and a left part thereof. The turn signal 18 of this embodiment has a shape elongated in a fore and rear direction, and has a front portion facing forward. The turn signal 18 is bent toward a rear side in a middle portion thereof. A rear portion of the turn signal 18 faces toward the outside in the vehicle widthwise direction.

An upper part 39a of the back cover part 39 is arranged behind the head pipe 21 and covers the head pipe 21 (see Fig. 1). Further, the back cover part 39 is arranged above the main frame part 22, and extends obliquely in the rearward and downward direction along the main frame part 22 thus covering the main frame part 22 (see Fig. 1 and Fig. 7). As shown in Fig. 7, the front cover part 31 and the side cover parts 32 is arranged to form an opening which opens rearward, and then the back cover part 39 closes the opening. That is, left and right edges 39b of the back cover part 39 fit on a rear edge 31a of the front cover part 31 and fit on rear edges of the left and right side cover parts 32 (rear edges 33a of the outer cover parts 33 described later), respectively. When the rider rides on the motorcycle 1, the back cover part 39 is positioned in front of rider's legs.

The side cover parts 32 cover left and right sides of the vehicle body respectively. As shown in Fig. 7, the side cover part 32 includes the plate-like outer cover part 33 and the plate-like inner cover part 34. The inner cover part 34 is arranged inwardly from the outer cover part 33 in the vehicle widthwise direction. That is, the inner cover part 34 is positioned closer to the center C in the vehicle widthwise direction than the outer cover part 33 is positioned.

As shown in Fig. 1, lower portion of the outer cover part 33 and lower portion of the inner cover part 34 are positioned from the engine front part 12 in the lateral direction thus covering the engine front part 12. That is, the engine front part 12 is positioned between lower portions of the left and right side cover parts 32. Further, the lower portion of the outer cover parts 33 and the lower portion of the inner cover parts 34 are positioned forward from the footrest 8 as viewed in a side view of the vehicle body. The outer cover part 33 and the inner cover part 34 extend upwardly from the lower portions. When the rider rides on the motorcycle 1, the outer cover parts 33 and the inner cover parts 34 are positioned in front of the rider's legs.

As shown in Fig. 7, the outer cover parts 33 and the inner cover parts 34 are arranged obliquely with respect to the vehicle traveling direction such that an air flowing rearward hits on outer surfaces of these cover parts during traveling of the vehicle, and thus rear edges 33a, 34a of these cover parts are positioned further outwardly than front edges 33b, 34b of these cover parts in the vehicle widthwise direction. As explained in detail later, in this embodiment, openings A1, A2, A3 are formed between the outer cover part 33 and the inner cover part 34 (see Fig. 5). Further, angle α (see Fig. 7) which the outer cover part 33 makes with respect to the vehicle traveling direction is smaller in the lower portion of the cover part 33 than in the upper portion of the cover part 33. Further, angle β (see Fig. 7) which the inner cover part 34 make with respect to the vehicle traveling direction is smaller in the lower portion of these cover part 34 than in the upper portion of the cover part 34. By setting the angles of these cover parts 33, 34 in this manner, air for cooling the engine front part 12 can be easily taken through the opening A3 formed between the lower portions of two cover parts 33, 34.

As shown in Fig. 5, the outer cover parts 33 and the inner cover parts 34 are bent such that those parts bulge outwardly in the vehicle widthwise direction. The outer cover part 33 has, in a position distance from an upper edge and a lower edge thereof, an outermost part 33c which is arranged at the outermost position in the vehicle widthwise direction. A vertical line L1 which passes the outermost part 33c is positioned further outward than an inner end portion 8b of the footrest 8 in the vehicle widthwise direction. Accordingly, when the rider places his foot on the footrest 8, a part around rider' s knee and thigh is concealed by the upper portion of the outer cover part 33. Accordingly, it is possible to suppress the direct hitting of the air flow on the rider's knees and thighs.

As described above, the angles which the outer cover part 33 and the inner cover part 34 make with respect to the vehicle traveling direction in the lower portions of these parts are smaller than the angles which the outer cover part 33 and the inner cover part 34 make with respect to the vehicle traveling direction in the upper portions of these parts. In other words, the angles that the upper portions of these cover parts 33, 34 make are bigger than the angles that the lower portions of these cover parts 33, 34 make. Due to such structure which these cover parts 33, 34 have, an air flow hardly directly hits on the rider' knees and thighs placed behind the upper portions of these cover parts 33, 34. In this embodiment, the upper portions of the outer cover parts 33 and the inner cover parts 34 are bent toward the center C in the vehicle widthwise direction while extending forward.

The outer cover parts 33 and the inner cover parts 34 extend upwardly from positions lower than the footrests 8, and upper edges 33g and upper ends 34g of these cover parts 33, 34 are positioned higher than an uppermost part 2a of the front wheel 2 (see Fig. 1 and Fig .2). Accordingly, air which flows along left and right sides of the front wheel 2 can be taken into spaces inside the left and right inner cover parts 34. Further, in this embodiment, the openings A1, A2 are formed between the upper portion of the outer cover part 33 and the upper portion of the inner cover part 34 (see Fig. 5). Accordingly, air which passes through the left and right sides of an upper portion of the front wheel 2 can be taken through these openings A1, A2. The air taken through the openings cools the engine front part 12 or is supplied to the air cleaner 19 positioned above the engine front part 12.

In this embodiment, the upper ends 34g of the inner cover parts 34 and front ends 33i of the upper edges 33g of the outer cover parts 33 are positioned higher the front fender 5. Accordingly, air which flows along left and right sides of the front fender 5 can be taken through a space formed between the inner cover part 34 and the outer cover part 33. Lower ends 33e, 34e of the outer cover parts 33 and the inner cover parts 34 may be positioned at the same height as the footrests 8.

Upper edges 33g of the left and right outer cover parts 33 are connected to lower edges of left and right side portions of the front cover part 31 respectively (see Fig. 2). As shown in Fig. 5, a boundary between the front cover part 31 and the outer cover parts 33 is recessed as viewed in a front view. That is, each outer cover part 33 extends outward in the vehicle widthwise direction from the upper edge 33g thereof and, thereafter, is bent downwardly.

As shown in Fig. 2 and Fig. 7, the front edges 34b of the inner cover parts 34 are positioned further forward than the front edges 33b of the outer cover parts 33. Each rear edge 34a of the inner cover part 34 is positioned inwardly away from the outer cover part 33 in the vehicle widthwise direction.

When the motorcycle travels in rain or the like, there may be a case where water adheres on outer surfaces of the outer cover parts 33 and outer surfaces of the inner cover parts 34. Water on these outer surfaces flows rearward due to the air flow generated during traveling of the vehicle. In this embodiment, each rear edae 33a of the outer cover part 33 is positioned outwardly away from the inner cover part 34 in the vehicle widthwise direction. Therefore, it is possible to prevent water on the outer surfaces of the inner cover parts 34 from reaching the outer surfaces of the outer cover parts 33. As a result, compared to the structure where the side cover part 32 is formed of one plate-like member, an amount of water which hits on the rider' s knees and thighs can be reduced.

Particularly, in this embodiment, the rear edges 34a of the inner cover parts 34 are positioned further rearward than the front edges 33b of the outer cover parts 33. That is, a rear portion of the inner cover part 34 overlaps the outer cover part 33 as viewed in a side view of the vehicle body. Accordingly, it is possible to further effectively prevent water on the outer surfaces of the inner cover parts 34 from reaching the outer surfaces of the outer cover parts 33. Further, it is possible to conceal a fixing structure between the inner cover part 34 and the outer cover part 33 (to be more specific, wall portions 41, 42, 43, 44 described later) by the outer cover part 33.

Further, as described above, the openings A1, A2, A3 are formed between the outer cover part 33 and the inner cover part 34 (see Fig. 5). Accordingly, by positioning the front edges 33b of the left and right outer cover parts 33 toward outside in the vehicle widthwise direction, an amount of air taken into a space formed between the left and right outer cover parts 33 can be increased. When positioning the front edge of side cover part toward outside in a structure where a side cover part is formed of one plate-like member, the engine front part 12 and the air cleaner 19 can be easily visually recognized when viewed in an oblique front side. In this embodiment, however, each side cover part 32 includes the inner cover part 34 and hence, even when the front edges 33b of the left and right outer cover parts 33 are positioned outwardly, the exposure of the engine front part 12 and the air cleaner 19 can be suppressed by the inner cover parts 34.

As shown in Fig. 2, a width of the inner cover part 34 in the vertical direction is substantially equal to a width of the outer cover part 33 in the vertical direction. To be more specific, the width of the inner cover part 34 in the vertical direction is substantially equal to a width of the front portion of the outer cover part 33 in the vertical direction. In this embodiment, as described above, the upper edges 33g of the outer cover parts 33 are connected to the lower edges of the left and right side parts of the front cover part 31 respectively. The upper ends 34g of the inner cover parts 34 are positioned at the substantially same height as the upper edges 33g of the outer cover parts 33. Further, the lower ends 34e of the inner cover parts 34 are positioned at the substantially same height as the lower ends 33e of the outer cover parts 33. Further, the whole inner cover part 34 is offset frontward with respect to the outer cover part 33. Accordingly, it is possible to prevent water or mud from being splashed to rider's feet over a wide range in the vertical direction. Further, the engine front part 12 or the like can be suppressed over a wide range in the vertical direction from being exposed by the inner cover parts 34.

As shown in Fig. 5, each inner cover part 34 is formed in an extending manner along an inner surface of the outer cover part 33. That is, the inner cover part 34 is bent in conformity with a bent-shape of the outer cover part 33 such that the inner cover part 34 bulges outwardly in the vehicle widthwise direction as viewed in a front view. Due to such a constitution, it is possible to increase the strength of the inner cover part 34 against a force which the inner cover part 34 receives from air during traveling of the vehicle. Further, as described later, the inner cover part 34 is fixed on the outer cover part 33 and hence, the strength of the outer cover part 33 can be also increased.

As shown in Fig. 2 and Fig. 7, a width W1 of the outer cover part 33 in the fore and rear direction is larger than a width W2 of the inner cover part 34 in the fore and rear direction. Due to such structure, compared to a structure where the width of the outer cover part 33 is smaller than the width of the inner cover part 34, the front edges 33b of the outer cover parts 33 can be arranged further frontward. As a result, air can be easily taken into a space inside the left and right outer cover parts 33.

As shown in Fig. 1 and Fig. 2, upper ends of the front edges 34b of the inner cover parts 34 are positioned further forward than the front suspensions 3, and each front edge 34b extends obliquely in the rearward and downward direction from the upper end thereof. In this embodiment, the upper ends of the front edges 34b are positioned further forward than the outermost part 5a of the front fender 5 (see Fig. 5). The air flow generated during traveling of the vehicle hits on the front suspensions 3 or the outermost parts 5a of the front fender 5, and then spreads outwardly in the vehicle widthwise direction. In this embodiment, the upper end of the front edge 34b of the inner cover part 34 is positioned further forward than the front suspension 3 and the outermost portion 5a of the front fender 5, and the front edge 34b extends obliquely in the rearward and downward direction from the upper end thereof. Accordingly, the left and right inner cover parts 34 can take air into spaces between the left and right inner cover parts 34 before an air flow widely spreads. The front edge 34b of the inner cover part 34 extends obliquely in the rearward and downward direction as described above and hence, an upper end of the front edge 34b may be referred to as a front end. The front portion of the inner cover part 34 is positioned further forward than the rear end of the turn signal 18. In other words, an upper portion of the inner cover part 34 is positioned further forward than a rear end of the turn signal 18.

Further, an upper end of the front edge 33b of the outer cover part 33 is also positioned further forward than the front suspension 3. The front edge 33b extends obliquely in the rearward and downward direction from an upper end thereof. In this embodiment, an upper end of the front edge 33b is also positioned further forward than the outermost portion 5a of the front fender 5 (see Fig. 5). Accordingly, it is possible to take in air through the openings A1, A2 formed between the outer cover part 33 and the inner cover part 34 before an air flow hits on the front suspension 3 and the outermost portion 5a and widely spreads. The front edge 33b of the outer cover part 33 extends obliquely in the rearward and downward direction as describe above and hence, the upper end of the front edge 33b may be referred to as a front end.

The opening A3 is formed between a lower portion of the inner cover part 34 and a lower portion of the outer cover part 33 (see Fig. 5). As shown in Fig. 2, the front edge 33b of the outer cover part 33 becomes closer to the front edge 34b of the inner cover part 34 as it goes toward lower side from an intermediate portion thereof in the vertical direction, as viewed in a side view of the vehicle body. Due to such structure, compared to the structure where a distance between the front edge 33b and the front edge 34b is maintained at a fixed value in the downward direction, a lower portion of the front edge 33b can be positioned more frontward and hence, an amount of air taken into spaces inside the left and right outer cover parts 33 can be increased.

As shown in Fig. 2, the outer cover part 33 has a rearmost portion 33f on an approximately middle portion thereof in the vertical direction. The rearmost portion 33f is positioned rearmost at the rear edge 33a of the outer cover part 33. The rearmost portion 33f becomes a portion closest to a leg of a rider when the rider rides on the motorcycle 1. With respect to the front edge 34b of the inner cover part 34, a distance from the front edge 33b of the outer cover part 33 to the front edge 34b is the maximum at a middle portion 34f in the vertical direction. Accordingly, a function of the inner cover part 34, that is, the reduction of an amount of water which reaches the rear edge 33a of the outer cover part 33 has well effect at the middle portion 34f of the inner cover part 34. On the other hand, as described above, the outer cover part 33 includes, at a middle portion thereof in the vertical direction, the rearmost portion 33f which is closest to a leg of a rider. That is, a function of the inner cover part 34 is particularly improved at a height of the portion of the inner cover part 34 closest to the leg of the rider.

The openings A1, A2 are formed between an upper portion of the inner cover part 34 and an upper portion of the outer cover part 33 (see Fig. 5). Also in this embodiment, as viewed in a side view of the vehicle body, the front edge 33b of the outer cover part 33 becomes closer to the front edge 34b of the inner cover part 34, as it goes upward from the middle portion thereof in the vertical direction. Due to such structure, compared to the structure where a distance between the front edge 33b and the front edge 34b is maintained at a fixed value in the upward direction, the upper portion of the front edge 33b can be positioned further frontward. As a result, it is possible to increase an amount of air supplied to the air cleaner 19 which is positioned between the upper portions of the left and right inner cover parts 34 in the vehicle widthwise direction and is arranged behind these upper portions in the fore and rear direction.

As shown in Fig. 2, as viewed in a side view of the vehicle body, an outer peripheral portion of the front fender 5 overlaps the inner cover part 34. Accordingly, an air flow which passes through a side surface of the front fender 5 can be easily taken into a space inside the inner cover parts 34.

Particularly, in this embodiment, a lower part of the front edge 34b of the inner cover part 34 overlaps an outer peripheral portion of a rear part 5b of the front fender 5 as viewed in a side view of the vehicle body. By arranging the inner cover part 34 in such a manner, the engine front part 12 is hardly exposed through a gap between the front fender 5 and the inner cover part 34. In this embodiment, as described previously, the front fender 5 is bent in an arcuate shape about an axle of the wheel 2. The front edge 34b of the inner cover part 34 is also bent in an arcuate shape about the axle of the front wheel 2 as viewed in a side view of the vehicle body.

In this embodiment, the outer cover part 33 is a member integrally molded with the front cover part 31. The outer cover parts 33 extend downwardly from a lower edge of a right side portion of the front cover part 31 and a lower edge of a left side portion of the front cover part 31, respectively. The outer cover part 33 and the front cover part 31 can be, at the time of manufacturing them, molded by removing them from a mold in the fore and rear direction, for example. The inner cover part 34 is a member separately molded from the outer cover part 33. The inner cover part 34 can be molded by removing a mold in the lateral direction, for example.

The forming method of the inner cover part 34 and the outer cover part 33 is not limited to the above mentioned method. For example, the outer cover part 33 may be molded separately from the front cover part 31. In this case, the outer cover part 33 and the inner cover part 34 may be integrally molded with each other. Further, a right portion and a left portion of the front cover part 31 may be molded separately from each other. In this case, the right portion of the front cover part 31 and the right outer cover part 33 may be integrally molded with each other, and the left portion of the front cover part 31 and the left outer cover part 33 may be integrally molded with each other. Further, the front cover part 31, the outer cover part 33 and the inner cover part 34 may be integrally molded as a whole.

The motorcycle 1 includes, as described above, the lower cover part 36 and the back cover part 39. In this embodiment, the lower cover part 36 and the back cover part 39 are molded separately from the front cover part 31 and the outer cover part 33. Further, the lower cover part 36 and the back cover part 39 are also molded separately from the inner cover part 34. The lower cover part 36 is, as described later, fixed to the inner cover part 34 and the outer cover part 33 by fastening members such as screws or bolts. An edge of the back cover part 39 is fixed on an edge of the front cover part 31 and an edge of the outer cover part 33. The split structure of these cover parts is not limited to the above-mentioned structures. For example, the lower cover part 36 may be integrally molded with the inner cover part 34.

As described above, the openings A1, A2, A3 are formed between the inner cover part 34 and the outer cover part 33 (see Fig. 5). Air which passes through the openings A1, A2, A3 cools the engine front part 12 or can be supplied to the air cleaner 19. Further, the air resistance of the side cover part 32 can be reduced by the openings A1, A2, A3.

As shown in Fig. 5 and Fig. 6, wall portions 42, 43, 44 are formed between the inner cover part 34 and an inner surface of the outer cover part 33. The wall portions 42, 43, 44 have surfaces facing forward. Accordingly, the flow of water or mud on the outer surface of the inner cover part 34 toward a rear side can be suppressed by the wall portions 42, 43, 44. In this embodiment, the wall portion 41 is further formed between the inner cover part 34 and an inner surface of the outer cover part 33. The wall portion 41 is positioned above the wall portions 42, 43, 44. The wall portions 41, 42, 43, 44 are arranged in this order from above.

As shown in Fig. 5 and Fig. 6, the wall portions 42, 43 partition the openings A1, A2, A3 formed between the inner cover part 34 and the outer cover part 33 in the vertical direction. The opening A1 is defined between the uppermost wall portion 41 and the wall portion 42. The opening A2 is defined between the wall portion 42 and the wall portion 43. The opening A3 is defined between the wall portion 43 and the lowermost wall portion 44.

As shown in Fig. 5, the opening A3 below the wall portion 43 has a width in the vertical direction larger than widths of the openings A1, A2 above the opening A3. Due to such structure, it is possible to easily ensure an amount of air for cooling the engine front part 12. The air cleaner 19 is positioned, as viewed in a front view, between the openings A2, A3 formed in the right side cover part 32 and the openings A2, A3 formed in the left side cover part 32. Air can be supplied to the air cleaner 19 through the openings A2, A3.

As shown in Fig. 5, a lower portion of the inner cover part 34 is positioned largely away from the outer cover part 33 compared to an upper portion of the inner cover part 34. That is, a distance in the vehicle widthwise direction between the inner cover part 34 and the outer cover part 33 is larger at the lower portions of these cover parts 33, 34 than at the upper portions of these cover parts 33, 34. Accordingly, a distance between the lower portion of the inner cover part 34 and the engine front part 12 can be made small so that the engine front part 12 is hardly visually recognized. Further, water or mud splashed by the front wheel 2 adheres on the lower portion of the inner cover part 34 and the lower portion of the outer cover part 33. In the motorcycle 1, as described above, the distance in the vehicle widthwise direction between the outer cover part 33 and the inner cover part 34 is larger at the lower portions of these cover parts than at the upper portions of these cover parts. Accordingly, it is possible to further surely suppress water or mud on the lower portions of the inner cover parts 34 from reaching the outer surfaces of the outer cover parts 33.

Further, the opening A3 which is formed between the lower portions of two cover parts 33, 34 has a larger width in the lateral direction than the openings A1, A2 which are formed between the upper portions of two cover parts 33, 34. Accordingly, an amount of air for cooling the engine front part 12 can be increased.

During traveling of the vehicle, air hits on the outer surface of the outer cover part 33 and hence, a force which pushes the outer cover part 33 to the center C in the vehicle widthwise direction is generated. As described previously, the wall portions 41, 42, 43, 44 are formed between the outer cover part 33 and the inner cover part 34. End portions of the wall portions 41, 42, 43, 44 are brought into contact with the inner surface of the outer cover part 33. Accordingly, the strength of the outer cover part 33 against the force which the outer cover part 33 receives from air is increased.

In this embodiment, the outer cover part 33 and the inner cover part 34 have a plurality of (four in this embodiment) wall portions 41, 42, 43, 44 therebetween which are arranged away from each other in the vertical direction. Accordingly, it is possible to increase the strength of the outer cover part 33 in a wide range in the vertical direction while reducing the air resistance due to the side cover part 32.

As described previously, the angle which the upper portion of the outer cover part 33 makes with respect to the fore and rear direction is larger than the angle which the lower portion of the outer cover part 33 makes with respect to the fore and rear direction. Accordingly, during traveling of the vehicle, the upper portion of the outer cover part 33 receives a larger force from air compared to the lower portion of the outer cover part 33. The plurality of wall portions 41, 42, 43, 44 are, as the whole, positioned unevenly such that the number of walls is larger on an upper side of the outer cover part 33 than on a lower side of the outer cover part 33. In this embodiment, two walls 41, 42 are arranged on the upper portion of the outer cover part 33, the wall portion 43 is positioned at an approximately middle portion of the outer cover part 33 in the vertical direction, and the wall portion 44 is positioned at the lowermost portion of the outer cover part 33. By arranging the wall portions 41, 42, 43, 44 in this manner, the strength of the part of the outer cover part 33 which receives a large force from air can be particularly increased.

The wall portions 42, 43 are positioned rearward away from the front edge 33b of the outer cover part 33. Accordingly, the wall portions 42, 43 can increase the strength of the center portion of the outer cover part 33 in the fore and rear direction. The wall portions 42, 43 are provided between the uppermost wall portion 41 and the lowermost wall portion 44. Accordingly, the wall portions 42, 43 can increase the strength of the center portion of the outer cover part 33 in the vertical direction.

As shown in Fig. 6 and Fig. 8, the wall portions 42, 43, 44 have first surface portions 42a, 43a, 44a which form surfaces facing forward respectively. The wall portions 42, 43, 44 also have second surface portions 42b, 43b, 44b which form surfaces bent with respect to the first surface portions 42a, 43a, 44a respectively. Accordingly, the strength of the wall portions 42, 43, 44 per se can be increased. The wall portion 41 has a first surface portion 41a which forms a surface substantially facing downward, and a second surface portion 41b which is bent with respect to the first surface portion 41a. Accordingly, the strength of the wall portion 41 can be increased.

As shown in Fig. 6 and Fig. 8, the wall portion 43 has two second surface portions 43b, and these second surface portions 43b extend rearward from an upper edge and a lower edge of the first surface portion 43a. The second surface portion 44b of the wall portion 44 extends rearward from an upper edge of the first surface portion 44a. Due to such structure, the wall portions 43, 44 have the high strength against a force which intends to bend these wall portions 43, 44 rearward.

Particularly, the wall portion 43 further includes a third surface portion 43c which faces the inner surface of the outer cover part 33 in the vehicle widthwise direction. The third surface portion 43c is connected to the first surface portion 43a and the second surface portion 43b at an edge thereof. Due to such structure, the wall portion 43 has the particularly high strength.

As shown in Fig. 6, the wall portion 41 and the wall portion 42 has a bridge 45 therebetween which is extended between these two wall portions 41, 42. Accordingly, the strength of the wall portions 41, 42 can be increased. In this embodiment, the second surface portions 41b, 42b are formed on outer edges of the first surface portions 41a, 42a in the vehicle widthwise direction. The bridge 45 is extended between the second surface portion 41b of the wall portion 41 and the second surface portion 42b of the wall portion 42. A part which is surrounded by the bridge 45, the wall portion 41 and the wall portion 42 forms the opening A1.

As shown in Fig. 8, the wall portions 41, 42, 43, 44 are integrally molded with the inner cover part 34. The wall portions 41, 42, 43, 44 project outwardly in the vehicle widthwise direction from the rear edge 34a of the inner cover part 34. As described previously, the rear edge 34a is positioned further rearward than the front edge 33b of the outer cover part 33. Accordingly, the wall portions 41, 42, 43, 44 are hardly visually recognized.

The outer cover part 33 and the inner cover part 34 are fixed to each other through the wall portions 41, 42, 43, 44. The wall portion 41 fixedly connects an uppermost portion of the outer cover part 33 and an uppermost portion of the inner cover part 34 to each other. Further, the wall portion 44 fixedly connects a lowermost portion of the outer cover part 33 and a lowermost portion of the inner cover part 34 to each other. Accordingly, even when the vehicle body vibrates during traveling of the vehicle, it is possible to prevent jolting of the uppermost portion and the lowermost portion.

The wall portions 41, 42, 43, 44 have fixed portions 41d, 42d, 43d, 44d which are fixed on the outer cover part 33. In this embodiment, the wall portions 41, 42, 43, 44 are fixed on the outer cover part 33 with fastening members such as screws, bolts, rivets. In the structure according to this embodiment which uses the fastening members, the fixed portions 41d, 42d, 43d, 44d are holes into which the fastening members are inserted.

As shown in Fig. 4 and Fig. 5, the lower cover part 36 is arranged upward from the engine front part 12. Both lowermost portions of the left and right side cover parts 32 (that is, lowermost portions of the cover parts 33, 34) are fixed to the lower cover part 36. Accordingly, during traveling of the vehicle, it is possible to suppress the jolting of the lowermost portions of the left and right side cover parts 32. In this embodiment, the outer cover part 33 includes, on a lowermost portion thereof, a wall portion 33h which projects toward the center in the vehicle widthwise direction. The first surface portion 44a of the wall portion 44 and the wall portion 33h overlaps each other, and are fixed to the lower cover part 36 using a common fastening member (a screw 51 in this embodiment). Due to such a constitution, it is possible to reduce the number of fastening members.

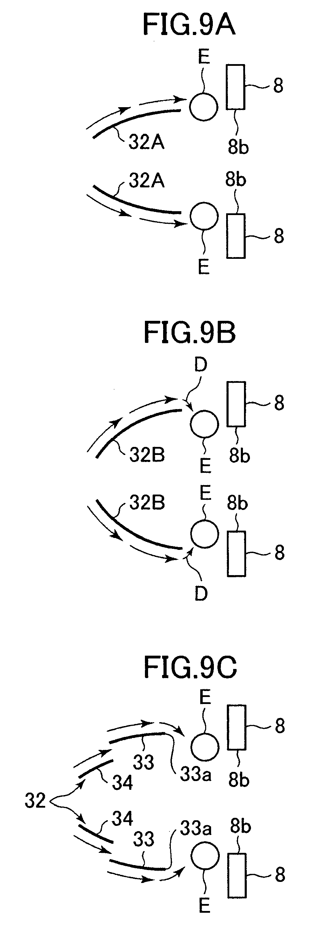

An advantageous effect obtained by the structure of the motorcycle 1 will be explained hereinafter by comparing the structure of this embodiment with the conventional structure. Fig. 9A to Fig. 9C are views for explaining an advantageous effect acquired by the structure of the motorcycle 1. Fig. 9A is a view schematically showing the structure of a conventional side cover part 32A, Fig. 9B is a view schematically showing a side cover part 32B where a width of the conventional side cover part 32A is increased, and Fig. 9C is a view schematically showing the structure of the side cover part 32 of the motorcycle 1. These drawings shows horizontal cross section of portions of the left and right side cover parts has a maximum width of left and right side covers.

In Fig. 9A, side cover parts 32A are respectively constituted of a plate-like member. Accordingly, water or mud on the side cover part 32A in the vicinity of a front edge of the side cover part 32A flows on an outer surface of the side cover part 32A until water or mud reaches a rear edge of the side cover part 32A by receiving an air flow generated during traveling. In Fig. 9A, a distance between rear edges of the left and right side cover parts 32A is relatively small and hence, the rear edges are positioned in front of the inner end portions 8b of the footrests 8, and legs E of the rider who rides on the motorcycle project outwardly in the vehicle widthwise direction from the rear edges. As a result, water or mud which reaches the rear edges is splashed to the legs E.

Positions of rear edges of side cover parts 32B shown in Fig. 9B extend more outwardly in the vehicle widthwise direction than the rear edges of the side cover parts 32A shown in Fig. 9A. Accordingly, the rear edges of the side cover parts 32B are positioned further outwardly in the vehicle widthwise direction than the inner end portions 8b of the footrests 8, and legs E of a rider are positioned further inwardly than the rear edges of the side cover parts 32B. However, a negative pressure is generated on rear sides of the side cover parts 32B during traveling of a vehicle and hence, an air flow D which is directed inwardly in the vehicle widthwise direction is formed. Accordingly, water or mud which reaches the rear edges of the side cover parts 32B splashes toward the legs E of the rider due to the air flow D.

As shown in Fig. 9C, the side cover parts 32 of this embodiment includes the outer cover parts 33 and the inner cover parts 34 which are positioned more inwardly in the vehicle widthwise direction than the outer cover parts 33. Water or mud on the inner cover parts 34 flows rearward by receiving an air flow which is generated during traveling of a vehicle. However, the rear edges 34a of the inner cover parts 34 (see Fig. 7) are positioned inwardly away from the inner surfaces of the outer cover parts 33 in the vehicle widthwise direction. Accordingly, water or mud which flows rearward, without reaching outer surfaces of the outer cover parts 33, flows toward inside the outer cover parts 33 through the above-mentioned openings A1, A2, A3 or hits on the wall portions 41, 42, 43, 44 and then flows downwardly. Accordingly, an amount of water or mud which reaches the rear edges 33a of the outer cover parts 33 can be reduced. As a result, an amount of water or mud which is splashed to the legs E of the rider can be reduced. Here, the rear edges 33a of the outer cover parts 33 are positioned further outwardly in the vehicle widthwise direction than the inner end portions 8b of the footrests 8. Accordingly, the legs E of the rider are positioned closer to the center in the vehicle widthwise direction than the rear edges 33a.

Further, the lateral width of the outer cover parts 33 and the inner cover parts 34 as a whole is substantially as large as the lateral width of the side cover parts 32B shown in Fig. 9B. However, to focus on only the inner cover parts 34, the width of the inner cover parts 34 is smaller than the width of the side cover parts 32B. Accordingly, an amount of water or mud which adheres on the outer surfaces of the inner cover parts 34 and flows to the rear edges 34a can be made small compared to an amount of water or mud on the outer surfaces of the side cover parts 32B. As a result, it is possible to further reduce an amount of water or mud which is splashed to the legs E of the rider.

As has been explained heretofore, in the motorcycle 1, the side cover part 32 includes the outer cover part 33 and the inner cover part 34. The lower portion of the outer cover part 33 is positioned forward from the footrest 8 and on one side of the engine front portion 12. The outer cover part 33 upwardly extends from the lower portion thereof, and covers the one side of the vehicle body. The inner cover part 34 is arranged inwardly from the outer cover part 33 in the vehicle widthwise direction. The front edge 34b of the inner cover part 34 is positioned further forward than the front edge 33b of the outer cover part 33 and the rear edge 34a of the inner cover part 34 is positioned inwardly in the vehicle widthwise direction away from the outer cover part 33. According to such a motorcycle 1, water or mud on an outer surface of the inner cover part 34 does not reach an outer surface of the outer cover part 33 during traveling. Accordingly, compared to a structure where the side cover part 32 is formed of one plate-like member shown in Fig. 9A or Fig. 9B, the above-mentioned structure can reduce water or mud splashed toward legs of a rider from the rear edge of the side cover part 32, that is, the rear edge 33a of the outer cover part 33.

Further, in the motorcycle 1, the rear edges 34a of the inner cover parts 34 are positioned more rearward than the front edges 33b of the outer cover parts 33. Due to such structure, it is possible to further surely prevent water or mud on the outer surfaces of the inner cover parts 34 from reaching the outer surfaces of the outer cover parts 33.

Further, in the motorcycle 1, the outer cover parts 33 and the inner cover parts 34 extends between a position equal to or lower than the footrests 8 and a position higher than the uppermost portion 2a of the front wheel 2. Due to such structure, air which flows along left and right sides of the front wheel 2 can be taken into the space between the right side cover part 32 and the left side cover part 32.

There may be a case where water or mud which is splashed by the front wheel 2 adheres on the lower portions of the inner cover parts 34 and the lower portions of the outer cover parts 33. In the motorcycle 1, the distance in the vehicle widthwise direction between the outer cover part 33 and the inner cover part 34 is larger at the lower portions of these cover parts than at the upper portions of these cover parts. Due to such structure, it is possible to suppress water or mud on the lower portions of the inner cover parts 34 from reaching the outer surfaces of the outer cover parts 33. Further, due to such structure, the distance between the inner cover parts 34 and the engine front part 12 can be made small and hence, the engine front part 12 is hardly visually recognized.

Further, in the motorcycle 1, the inner cover part 34 overlaps the front fender 5 as viewed in a side view of the vehicle body. Due to such structure, the device which is arranged behind the front fender 5 and between the left and right inner cover parts 34 (the engine front part 12 in this embodiment) is further hardly visually recognized. When the side cover part is formed of one plate-like member and is arranged to overlap the front fender 5, a width of the side cover part in the fore and rear direction is increased and hence, an amount of water on the outer surface of the side cover part is also increased whereby an amount of water which is splashed to legs of a rider is also increased. In the motorcycle 1, the side cover part 32 is constituted of the inner cover part 34 and the outer cover part 33 and hence, even when the inner cover parts 34 are arranged so as to overlap the front fender 5, an amount of water which is splashed to the legs of the rider can be reduced.

Further, in the motorcycle 1, the wall portions 42, 43, 44 which have surfaces facing forward are arranged between the inner surface of the inner cover part 34 and the inner surface of the outer cover part 33. Due to such structure, it is possible to suppress the flow of water or mud on the outer surfaces of the inner cover parts 34 in the rearward direction by the wall portions 42, 43, 44.

Further, in the motorcycle 1, the end portions of the wall portions 42, 43, 44 in the vehicle widthwise direction are brought into contact with the inner surface of the outer cover part 33. Due to such structure, the strength of the outer cover part 33 against a force which the outer cover part 33 receives from air during traveling of the vehicle can be increased.

In the motorcycle 1, the inner surface of the outer cover part 33 and the inner surface of the inner cover part 34 have the plurality of wall portions 42, 43, 44 formed therein and positioned in a spaced-apart manner from each other in the vertical direction are arranged. Due to such structure, it is possible to further increase the strength of the outer cover part 33.

In the motorcycle 1, the wall portions 42, 43, 44 have the first surface portions 42a, 43a, 44a which form surfaces facing forward, and the second surface portions 42b, 43b, 44b which form surfaces bent with respect to the first surface portions 42a, 43a, 44a respectively. Due to such structure, the strength of the wall portions 42, 43, 44 can be increased.

Further, in the motorcycle 1, the openings A1, A2, A3 are formed between the inner cover part 34 and the outer cover part 33. Due to such structure, air which hits on the outer surface of the inner cover 34 and flows rearward can be taken into the inside of the outer cover part 33, and can be used for cooling the engine 10.

In the motorcycle 1, the wall portions 42, 43 which partition the openings A1, A2, A3 in the vertical direction are formed between the inner cover part 34 and the outer cover part 33. Further, the opening A3 formed on a lower side of the wall portion 43 is larger than the openings A1, A2 formed on an upper side of the wall portion 43. Due to such structure, an amount of air for cooling the engine 10 can be increased.

Further, in the motorcycle 1, the width W1 of the outer cover part 33 in the fore and rear direction is larger than the width W2 of the inner cover part 34 in the fore and rear direction. Due to such structure, compared to a case where the width of the outer cover part 33 is smaller than the width of the inner cover part 34, the front edge 33b of the outer cover part 33 can be positioned more frontward and hence, air can be easily taken into the inside of the left and right outer cover parts 33.

In the motorcycle 1, the inner cover part 34 is formed separately from the outer cover part 33. Due to such structure, the inner cover part 34 and the outer cover part 33 can be easily molded.

In the motorcycle 1, the wall portions 41, 42, 43, 44 are integrally formed with the inner cover part 34. Due to such structure, the outer cover part 33 can be easily formed.

Further, the motorcycle 1 further includes the front cover part 31 which covers the front side of the head pipe. The outer cover part 33 is integrally formed with the front cover part 31. Due to such structure, the number of steps of manufacturing the vehicle body cover can be reduced.

The present invention is not limited to the motorcycle 1 which has been explained heretofore, and various modifications are conceivable without deporting from the scope of the invention as defined in the appended claims.

For example, the split configuration constituted of the front cover part 31, the side cover part 32 and the outer cover part 33 may be suitably changed as described above.

Further, the wall portions 41, 42, 43, 44 may be integrally formed with the outer cover part 33.

Still further, the openings A1, A2, A3 may not be always formed between the outer cover part 33 and the inner cover part 34. Further, all of the above-mentioned openings A1, A2, A3 may not be always formed between the outer cover part 33 and the inner cover part 34. For example, only the opening A3 may be formed and other openings may not be formed.

## Claims

1. A motorcycle (1) comprising:
an engine (10) including a crankcase (11) positioned in a rear portion thereof and a cylinder part (12a) positioned in a front portion thereof;
a vehicle body frame (20) including a main frame part (22) extending obliquely in a rearward and downward direction from a head pipe (21) which supports a steering shaft, wherein a space (S) is formed above the main frame part (22);
a seat (7) arranged behind the space (S);
a footrest (8) arranged in a lateral direction from the crankcase (11); and
a side cover part (32) covering one lateral side of a right side and a left side of the vehicle body frame (20), wherein
the side cover part (32) comprises:
an outer cover part (33) which includes a lower portion positioned forward from the footrest (8) and positioned on one lateral side of the front portion of the engine (10), the outer cover part (33) extending upwardly from the lower portion and covering the ateral side of the vehicle body frame (20); and
an inner cover part (34) which covers the lateral side of the vehicle body frame (20) and is arranged inwardly from the outer cover part (33) in a vehicle widthwise direction, the inner cover part (34) including a front edge (34b) positioned further forward than a front edge (33b) of the outer cover part (33) and a rear edge (34a) positioned inwardly from the outer cover part (33) in the vehicle widthwise direction, and
the outer cover part (33) and the inner cover part (34) are arranged obliquely with respect to a fore and rear direction of the vehicle such that air hits on outer surfaces of the outer cover part (33) and the inner cover part (34) during traveling of the vehicle,
**characterized in that**
the rear edge (34a) of the inner cover part (34) is positioned further rearward than the front edge (33b) of the outer cover part (33), and
the outer cover part (33) and the inner cover part (34) extend from a position equal to or a lower position than the footrest (8) to a position higher than that of an uppermost portion of a front wheel (2).

2. The motorcycle (1) according to claim 1, wherein a distance in the vehicle widthwise direction between the outer cover part (33) and the inner cover part (34) is larger in a lower portion of the cover parts than in an upper portion of the cover parts.

3. The motorcycle (1) according to claim 1 or 2, wherein the inner cover part (34) overlaps a front fender (5) in a side view of the vehicle body frame (20).

4. The motorcycle (1) according to any one of claims 1 to 3, wherein a wall portion (42, 43, 44) having a surface facing forward is arranged between the inner cover part (34) and an inner surface of the outer cover part (33).

5. The motorcycle (1) according to claim 4, wherein the wall portion (42, 43, 44) has an end portion in the vehicle widthwise direction, the end portion brought into contact with the inner surface of the outer cover part (33).

6. The motorcycle (1) according to claim 5, wherein the motorcycle (1) includes a plurality of wall portions (42, 43, 44) each serving as the wall portion (42, 43, 44) and are positioned away from each other in a vertical direction.

7. The motorcycle (1) according to claim 5, wherein the wall portion (42, 43, 44) includes a first surface portion (42a, 43a, 44a) facing forward and a second surface portion (42b, 43b, 44b) which is bent with respect to the first surface portion (42a, 43a, 44a).

8. The motorcycle (1) according to any one of claims 1 to 7, wherein an opening (A1, A2, A3) is formed between the inner cover part (34) and the outer cover part (33).

9. The motorcycle (1) according to claim 8, wherein the inner cover part (34) and the outer cover part (33) have a wall portion (43) formed therebetween and partitioning the opening (A2, A3) in the vertical direction, and
an opening (A3) formed below the wall portion (43) is larger than opening (A2) formed above the wall portion (43).

10. The motorcycle (1) according to claim 8, wherein a width of the outer cover part (33) in the fore and rear direction is larger than a width of the inner cover part (34) in the fore and rear direction.

11. The motorcycle (1) according to any one of claims 1 to 10, wherein the inner cover part (34) is a member separately formed from the outer cover part (33).

12. The motorcycle (1) according to claim 4, wherein the wall portion (42, 43, 44) is integrally formed with the inner cover part (34).

13. The motorcycle (1) according to any one of claims 1 to 12, wherein the motorcycle (1) further includes a front cover part (31) which covers a front side of the head pipe (21), and the outer cover part (33) is integrally formed with the front cover part (31).

## Patentansprüche

1. Motorrad (1), aufweisend:
eine Brennkraftmaschine (10), enthaltend ein Kurbelgehäuse (11), positioniert in einem hinteren Abschnitt derselben, und ein Zylinderteil (12a), positioniert in einem vorderen Abschnitt desselben;
einen Fahrzeugkarosserierahmen (20), enthaltend ein Hauptrahmenteil (22), das sich schräg in einer Richtung nach hinten und nach unten von einem Kopfrohr (21) erstreckt, dass eine Lenkwelle lagert, wobei ein Raum (S) oberhalb des Hauptrahmenteils (22) gebildet ist;
einen Sitz (7), angeordnet hinter dem Raum (S);
eine Fußstütze (8), angeordnet in einer seitlichen Richtung von einem Kurbelgehäuse (11); und
ein Seitenabdeckteil (32), das eine seitliche Seite einer rechten Seite und einer linken Seite des Fahrzeugkarosserierahmens (20) abdeckt, wobei das Seitenabdeckteil (32) aufweist:
ein äußeres Abdeckteil (33), das einen unteren Abschnitt enthält, positioniert vor der Fußstütze (8) und positioniert auf einer seitlichen Seite des vorderen Abschnittes der Brennkraftmaschine (10), wobei sich das äußere Abdeckteil (33) nach oben von dem unteren Abschnitt erstreckt und ein inneres Abdeckteil (34), das die seitliche Seite des Fahrzeugkarosserierahmens (20) abdeckt und nach innen von dem äußeren Abdeckteil (33) in Richtung der Breite des Fahrzeuges angeordnet ist, wobei das innere Abdeckteil (34) eine vordere Kante (34b) enthält, positioniert weiter vorn als eine vordere Kante (33b) des äußeren Abdeckteils (33) und einer hinteren Kante (34a9, positioniert nach innen von dem äußeren Abdeckteil (33) in Richtung der Breite des Fahrzeuges; und
wobei das äußere Abdeckteil (33) und das innere Abdeckteil (34) schräg in Bezug auf eine vordere und hintere Richtung des Fahrzeuges derart angeordnet sind,
das Luft auf die Außenoberflächen des äußeren Abdeckteils (33) und das innere Abdeckteil (34) während des Fahrens des Fahrzeuges auftrifft,
**dadurch gekennzeichnet, dass**
die hintere Kante (34a) des inneren Abdeckteils (34) weiter nach hinten als die vordere Kante (33b) des äußeren Abdeckteils (33) positioniert ist, und
sich das äußere Abdeckteil (33) und das innere Abdeckteil (34) von einer Position gleich zu oder einer niedrigeren Position als die Fußstütze (8) zu einer Position höher als ein oberster Abschnitt eines Vorderrades (2) erstrecken.

2. Motorrad (1) nach Anspruch 1, wobei ein Abstand in Richtung der Breite des Fahrzeuges zwischen dem äußeren Abdeckteil (33) und dem inneren Abdeckteil (34) in einem unteren Abschnitt der Abdeckteile größer als in einem oberen Abschnitt der Abdeckteile ist.

3. Motorrad (1) nach Anspruch 1 oder 2, wobei das innere Abdeckteil (34) ein vorderes Schutzblech (5) in einer Seitenansicht des Fahrzeugkarosserierahmens (20) überlappt.

4. Motorrad (1) nach einem der Ansprüche 1 bis 3, wobei ein Wandabschnitt (42, 43, 44) eine Oberfläche mit nach vorn zugewandter Oberfläche hat, zwischen dem inneren Abdeckteil (34) und einer inneren Oberfläche des äußeren Abdeckteils (33) angeordnet ist.

5. Motorrad (1) nach Anspruch 4, wobei der Wandabschnitt (42, 43, 44) einen Endabschnitt in Richtung der Breite des Fahrzeuges hat, wobei der Endabschnitt in Kontakt mit der inneren Oberfläche des äußeren Abdeckteils (33) gebracht ist.

6. Motorrad (1) nach Anspruch 5, wobei das Motorrad (1) eine Mehrzahl von Wandabschnitten (42, 43, 44) enthält, die als der Wandabschnitt (42, 43, 44) dienen und voneinander in einer vertikalen Richtung entfernt sind.

7. Motorrad (1) nach Anspruch 5, wobei der Wandabschnitt (42, 43, 44) einen ersten, nach vorn gewandten Oberflächenabschnitt (42a, 43a, 44a) und einen zweiten Oberflächenabschnitt (42b, 43b, 44b) enthält, der in Bezug auf den ersten Oberflächenabschnitt (42a, 43a, 44a) gebogen ist.

8. Motorrad (1) nach einem der Ansprüche 1 bis 7, wobei eine Öffnung (A1, A2, A3) zwischen dem inneren Abdeckteil (34) und dem äußeren Abdeckteil (33) gebildet ist.

9. Motorrad (1) nach Anspruch 8, wobei das innere Abdeckteil (34) und das äußere Abdeckteil (33) einen zwischen diesem gebildeten Wandabschnitt (43) haben, und der die Öffnung (A2, A3) in der vertikalen Richtung trennt, und
wobei eine Öffnung (A3), gebildet unter dem Wandabschnitt (43), größer ist als eine Öffnung (A2), gebildet über dem Wandabschnitt (43).

10. Motorrad (1) nach Anspruch 8, wobei eine Breite des äußeren Abdeckteils (33) in der Richtung nach vorn und nach hinten größer als eine Breite des inneren Abdeckteils (34) in der Richtung nach vorn und nach hinten ist.

11. Motorrad (1) nach einem der Ansprüche 1 bis 10, wobei das innere Abdeckteil (34) von dem äußeren Abdeckteil (33) getrennt gebildetes Teil ist.

12. Motorrad (1) nach Anspruch 4, wobei der Wandabschnitt (42, 43, 44) mit dem inneren Abdeckteil (34) einstückig gebildet ist.

13. Motorrad (1) nach einem der Ansprüche 1 bis 12, wobei das Motorrad (1) außerdem ein vorderes Abdeckteil (31) enthält, das eine vordere Seite des Kopfrohres (21) abdeckt, und wobei das äußere Abdeckteil (33) mit dem vorderen Abdeckteil (31) einstückig gebildet ist.

## Revendications

1. Motocyclette (1) comprenant :
un moteur (10) incluant un carter (11) positionné dans sa portion arrière et une partie cylindrique (12a) positionnée dans sa portion avant ;
un cadre de corps de véhicule (20) incluant une partie de cadre principale (22) s'étendant obliquement vers l'arrière et vers le bas par rapport à un tuyau de tête (21) supportant un arbre de direction, dans lequel un espace (S) est formé au-dessus de la partie de cadre principale (22) ;
une selle(7) agencée derrière l'espace (S) ;
un repose-pied (8) agencé dans la direction latérale par rapport au carter (11) ; et
une partie de recouvrement latéral (32) recouvrant la face latérale du côté droit et la face latérale du cadre de corps de véhicule (20), dans laquelle
la partie de recouvrement latéral (32) comprend :
une partie de recouvrement externe (33) incluant une portion inférieure positionnée en avant du repose-pied (8) et positionnée sur une face latérale de la portion avant du moteur (10), la partie de recouvrement externe (33) s'étendant vers le haut par rapport à la portion inférieure et recouvrant la face latérale du cadre de corps de véhicule (20) ; et
une partie de recouvrement interne (34) qui recouvre la face latérale du cadre de corps de véhicule (20) et qui est agencée vers l'intérieur par rapport à la partie de recouvrement externe (33) dans le sens de la largeur du véhicule, la partie de recouvrement interne (34) incluant un bord avant (34b) positionné plus en avant que le bord arrière (33b) de la partie de recouvrement externe (33) et un bord arrière (34a) positionné vers l'intérieur par rapport à la partie de recouvrement externe (33) dans le sens de la largeur du véhicule, et
la partie de recouvrement externe (33) et la partie de recouvrement interne (34) sont agencées obliquement par rapport aux directions avant et arrière du véhicule de telle sorte que l'air frappe les surfaces externes de la partie de recouvrement externe (33) et de la partie de recouvrement interne (34) pendant le parcours du véhicule,
**caractérisée en ce que**
le bord arrière (34a) de la partie de recouvrement interne (34) est positionné plus en arrière que le bord avant (33b) de la partie de recouvrement externe (33), et
la partie de recouvrement externe (33) et la partie de recouvrement interne (34) s'étendent à partir d'une position identique ou d'une position plus basse que celle du repose-pied (8) jusqu'à une position plus haute que celle de la portion la plus haute de la roue avant (2).

2. Motocyclette (1) selon la revendication 1, dans laquelle la distance du véhicule dans le sens de la largeur entre la partie de recouvrement externe (33) et la partie de recouvrement interne (34) est plus grande dans la portion inférieure des parties de recouvrement que dans la portion supérieure des parties de recouvrement.

3. Motocyclette (1) selon la revendication 1 ou 2, dans laquelle la partie de recouvrement interne (34) est superposée à l'aile avant (5), vue du côté du cadre de corps de véhicule (20).

4. Motocyclette (1) selon l'une quelconque des revendications 1 à 3, dans laquelle une portion formant paroi (42, 43, 44) ayant une surface tournée vers l'avant est agencée entre la partie de recouvrement interne (34) et la surface interne de la partie de recouvrement externe (33).

5. Motocyclette (1) selon la revendication 4, dans laquelle la portion formant paroi (42, 43, 44) comporte une portion d'extrémité dans le sens de la largeur du véhicule, la portion d'extrémité étant amenée en contact avec la surface interne de la partie de recouvrement externe (33).

6. Motocyclette (1) selon la revendication 5, dans laquelle la motocyclette (1) comporte une pluralité de portions formant paroi (42, 43, 44) chacune servant de portion formant paroi (42, 43, 44) et qui sont positionnées à l'écart les unes des autres dans la direction verticale.

7. Motocyclette (1) selon la revendication 5, dans laquelle la portion formant paroi (42, 43, 44) comporte une première portion de surface (42a, 43a, 44a) tournée vers l'avant et une seconde portion de surface (42b, 43b, 44b) qui est incurvée par rapport à la première portion de surface (42a, 43a, 44a).

8. Motocyclette (1) selon l'une quelconque des revendications 1 à 7, dans laquelle une ouverture (A1, A2, A3) est formée entre la partie de recouvrement interne (34) et la partie de recouvrement externe (33).

9. Motocyclette (1) selon la revendication 8, dans laquelle la partie de recouvrement interne (34) et la partie de recouvrement externe (33) comportent une portion formant paroi (43) formée entre elles et partageant l'ouverture (A2, A3) dans la direction verticale, et
une ouverture (A3) formée au-dessous de la portion formant paroi (43) est plus grande qu'une ouverture (A2) formée au-dessus de la portion formant paroi (43).

10. Motocyclette (1) selon la revendication 8, dans laquelle la largeur de la partie de recouvrement externe (33) dans les directions avant et arrière est supérieure à la largeur de la partie de recouvrement interne (34) dans les directions avant et arrière.

11. Motocyclette (1) selon l'une quelconque des revendications 1 à 10, dans laquelle la partie de recouvrement interne (34) est un élément formé séparément de la partie de recouvrement externe (33).

12. Motocyclette (1) selon la revendication 4, dans laquelle la portion formant paroi (42, 43, 44) est formée d'un seul tenant avec la partie de recouvrement interne (34).

13. Motocyclette (1) selon l'une quelconque des revendications 1 à 12, dans laquelle la motocyclette (1) comporte en outre une partie de recouvrement avant (31) qui recouvre le côté avant du tuyau de tête (21), et la partie de recouvrement externe (33) est formée d'un seul tenant avec la partie de recouvrement avant (31).
